# EUROPÄISCHE PATENTSCHRIFT

(11) **EP 1 569 055 B1**
(45) Veröffentlichungstag und Bekanntmachung des Hinweises auf die Patenterteilung: **25.04.2007**
(21) Anmeldenummer: 04004217.8
(22) Anmeldetag: 25.02.2004
(51) Int. Cl.: G05B 19/042

(54) **Steckbarer Kommunikations-Baustein sowie Verfahren zur Kommunikation mittels eines steckbaren Kommunikations-Bausteins**
Plug-in communication device and method of communication using such a device
Dispositif de communication enfichable et procédé de communication utilisant un tel dispositif

(43) Veröffentlichungstag der Anmeldung: 31.08.2005
(73) Patentinhaber: SIEMENS AKTIENGESELLSCHAFT, 80333 München (DE)
(72) Erfinder: Amrhein, Armin, 92245 Kümmersbruck (DE); Thurner, Elmar, 90491 Nürnberg (DE)

(56) Entgegenhaltungen:
- DE-A- 4 223 193
- DE-A- 19 613 027
- US-A1- 2002 156 926
- US-B1- 6 370 603
- US-B1- 6 567 863

## Beschreibung

Steckbarer Kommunikations-Baustein sowie Verfahren zur Kommunikation mittels eines steckbaren Kommunikations-Bausteins

Die Erfindung betrifft einen steckbaren Kommunikations-Baustein sowie ein Verfahren zur Kommunikation mittels eines steckbaren Kommunikationsbausteins.

Die US 2002/0156926 A1 beschreibt einen unabhängigen Webserver, welcher an ein industrielles Automatisierungssystem angeschlossen werden kann, um direkten Zugriff auf Ein- und Ausgänge zu ermöglichen. Zur Koordination mit einer speicherprogrammierbaren Steuerung (PLC = Programmable Logic Controller) werden Sperrvermerke verwendet, welche sowohl Konflikte zwischen mehreren Webverbindungen als auch zwischen Webverbindungen und durch die speicherprogrammierbare Steuerung produzierten Steuerbefehlen verhindern.

Die US 6370603 B1 beschreibt ein intelligentes Kabel für eine Kommunikationsverbindung zwischen zwei Geräten mit unterschiedlichem Kommunikationsprotokoll.

Der Erfindung liegt die Aufgabe zugrunde, die Kommunikationsanbindung von Baugruppen und Geräten insbesondere über Internet zu vereinfachen.

Diese Aufgabe wird gelöst durch einen steckbaren Kommunikations-Baustein mit den Merkmalen des Anspruchs 1.

Diese Aufgabe wird durch ein Verfahren zur Kommunikation mittels eines steckbaren Kommunikations-Bausteins mit den Merkmalen des Anspruchs 11 gelöst.

Der Erfindung liegt die Idee zugrunde, die anwendungsunabhängige bzw. optionale Kommunikationsfunktionalität für Baugruppen in einem selbständigen, steckbaren Kommunikations-Baustein zu implementieren, anstatt auf der Baugruppe selbst, auf einer Rückwandbus-Baugruppe oder in einem abgesetzten Personal Computer (PC). Der Kommunikationsbaustein ist gemäß der Erfindung nicht dauerhaft fest mit einer Baugruppe verbunden. Mit dem Begriff Baugruppe ist auch ein Gerät o. Ä. gemeint.

Insbesondere wenn gemäß einer vorteilhaften Ausgestaltung der Erfindung zumindest eine der Softwarekomponenten zur Ausführung von Kommunikationsaufgaben mittels Internettechnologien vorgesehen ist, kann ein universell einsetzbarer, günstiger Kommunikations-Baustein zur Verfügung gestellt werden. Kommunikationsmittel zur Ausführung von Kommunikationsaufgaben mittels Internettechnologien müssen so in der Baugruppe nicht bereitgehalten werden, der Zugriff auf die Baugruppen über Internettechnologie ist optional trotzdem möglich. Der Kommunikations-Baustein benötigt keine Administration und für eine Vielzahl von Baugruppen, z. B. für alle speicherprogrammierbaren Steuerungen (PLC) einer Fabrik, für sämtliche Geräte in einem Haushalt ist nur ein einziger Kommunikations-Baustein notwendig, der bei Bedarf an die jeweilige Baugruppe angesteckt wird. Alle Software und Web-Kommunikationsfunktionalität kann auf den Kommunikations-Baustein ausgelagert werden und verursacht nur dort Kosten, nicht in der jeweiligen Baugruppe. Web-Funktionen sind jederzeit durch Anstecken eines Kommunikations-Bausteins einer Baugruppe hinzufügbar. Auch ganz einfache und kostengünstige Baugruppen können so optional mittels Internettechnologien gelesen und konfiguriert werden. Vorteilhafterweise ist eine der Softwarekomponenten ein Webserver oder zur Ausführung von Webservices vorgesehen.

Gemäß einer weiteren vorteilhaften Ausgestaltung der Erfindung sind die Zugriffsmittel zum Zugriff auf einen Daten- und Adressbus der Baugruppen vorgesehen, d. h. der Kommunikations-Baustein liegt elektrisch so nahe an der jeweiligen Baugruppe, dass baugruppeninterne bzw. kostengünstigere Zugriffsschnittstellen nutzbar sind, insbesondere nicht remote-fähige Software-Schnittstellen.

Eine universelle Verwendbarkeit des vorgeschlagenen Kommunikations-Bausteins kann gemäß einer weiteren Ausgestaltung der Erfindung dadurch erreicht werden, dass die Zugriffsmittel zum Zugriff auf die Kommunikationsmittel der Baugruppen mittels eines generisch erweiterbaren, lokal nutzbaren Punkt-zu-Punkt-Zugriffsprotokolls vorgesehen sind. Ein solches standardisiertes, einfach und kostengünstig zu realisierendes, nicht-remotefähiges Zugriffsprotokoll ist für beliebige Baugruppen einsetzbar. Somit sind aufgrund der Universalität des Kommunikations-Bausteins trotz optionaler Verwendung potentiell hohe Stückzahlen erreichbar, wodurch die Stückkosten eines solchen steckbaren Kommunikations-Bausteins gesenkt würden.

Die Integration von nachladbarer Anwendungssoftware wird ermöglicht, wenn gemäß einer weiteren vorteilhaften Ausgestaltung der Erfindung die Mittel zur Speicherung und Ausführung von Softwarekomponenten zum Laden von Softwarekomponenten vorgesehen sind.

Gemäß weiterer vorteilhafter Ausgestaltungen der Erfindung sind die ersten Anschlussmittel zur direkten elektrischen Kopplung mit Schnittstellen von Baugruppen industrieller Automatisierungssysteme vorgesehen bzw. sind die zweiten Anschlussmittel zur elektrischen Kopplung mit Schnittstellen von Mensch-Maschine-Schnittstellen-Komponenten für Engineering, Parametrierung und/oder Beobachtung der Baugruppen industrieller Automatisierungssysteme vorgesehen. Die Funktionalität der üblicherweise auf der jeweiligen Baugruppe zur Verfügung gestellten Engineering-, Diagnose-, Wartungs-Software kann bei Speicherung und Ausführung auf dem Kommunikations-Baustein wesentlich leistungsfähiger sein. Somit sind die neuesten, leistungsfähigsten und auch speicherintensive Software-Technologien nutzbar, weil sie den Kostenbeschränkungen durch die Baugruppen nicht unterliegen. Die Anbindung von Webbrowsern (z. B. HTTP Clients) an a priori nicht internetfähige Baugruppen für Engineering, Parametrierung und Beobachtung insbesondere im Automatisierungsumfeld wird ermöglicht.

Durch die mechanische Ausführung des Kommunikations-Bausteins als Stecker oder fest in ein Kabel integriert kann ein weiterer Kostenvorteil erzielt werden. Zudem wird die Handhabung eines solchen Kommunikations-Bausteins wesentlich erleichtert, da für die Kommunikation mit einer Baugruppe weder ein Eingriff in die jeweilige Baugruppe noch die Verwendung eines PC erforderlich ist.

Nachfolgend wird die Erfindung anhand der in den Figuren dargestellten Ausführungsbeispiele näher beschrieben und erläutert.

Es zeigen:
- FIG 1: ein System aus einem steckbaren Kommunikationsbaustein, einer Baugruppe und einer Mensch-Maschine-Schnittstellen-Komponente,
- FIG 2: ein Ausführungsbeispiel der Erfindung zur Anwendung in der Haustechnik und

- FIG 3: ein Ausführungsbeispiel der Erfindung zur Anwendung in der industriellen Automatisierungstechnik.

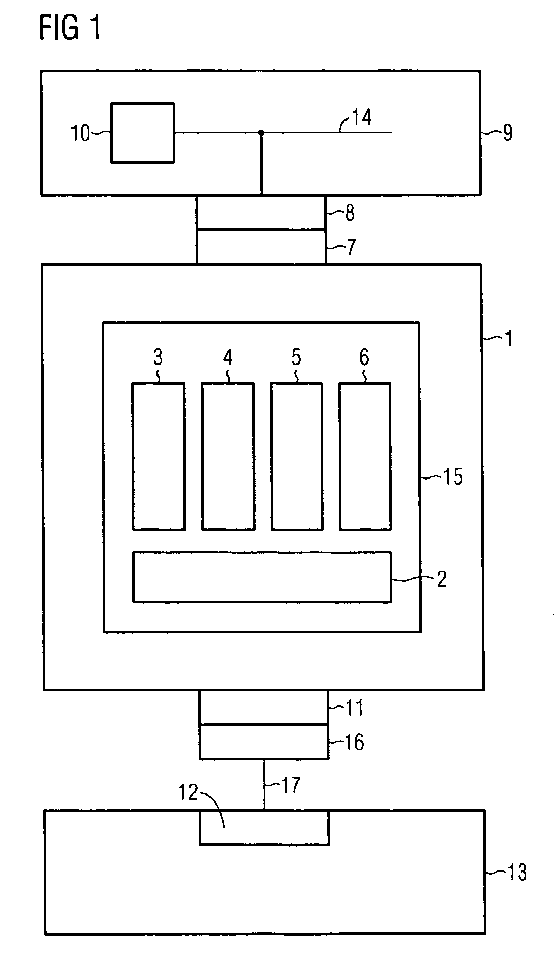

Figur 1 zeigt einen steckbaren Kommunikationsbaustein 1 mit Mitteln 2 zur Speicherung und Ausführung von Softwarekomponenten 3, 4, 5 mit Kommunikationsfunktionalität. Der Kommunikationsbaustein 1 weist erste Anschlussmittel 7 zur direkten elektrischen Kopplung mit einer Schnittstelle 8 einer Baugruppe 9 auf. Die Baugruppe 9 enthält Kommunikationsmittel 10, auf welche der Kommunikationsbaustein 1 mit Hilfe von Zugriffsmitteln 6 zugreifen kann. Der Kommunikationsbaustein 1 weist zweite Anschlussmittel 11 zur elektrischen Kopplung mit einer Schnittstelle 12 einer zweiten Baugruppe 13 in Form einer Mensch-Maschine-Schnittstellen-Komponente auf. Die Mittel 2 zur Speicherung und Ausführung der Softwarekomponenten 3, 4, 5 sind im Ausführungsbeispiel gemäß Figur 1 ein Betriebssystem und Speichermittel eines Mikroprozessors 15, welcher im steckbaren Kommunikationsbaustein 1 enthalten ist. Die Kopplung zwischen den zweiten Anschlussmitteln 11 des Kommunikationsbausteins 1 und der Schnittstelle 12 der zweiten Baugruppe 13 erfolgt mittels weiterer Anschlussmittel 16 und einer Leitung 17. Gemäß einer hier nicht dargestellten Ausführungsform der Erfindung könnten die zweiten Anschlussmittel 11 auch direkt mit einer Schnittstelle 12 einer zweiten Baugruppe 13 verbunden sein. Die Zugriffsmittel 6 des Kommunikationsbausteins 1 erlauben insbesondere einen Zugriff auf einen Daten- und Adressbus 14 der Baugruppe 9. Der Kommunikationsbaustein 1 ist als Steckermodul bzw. als Stecker ausgeführt. Dabei sind die ersten Anschlussmittel 7 insbesondere als Steckkontakte ausgeführt, so dass auf einfache Art und Weise eine Verbindung zu einer mit entsprechenden Buchsenkontakten ausgeführten Schnittstelle 8 hergestellt werden kann. Die zweiten Anschlussmittel 11 sind als Buchsenkontakte ausgeführt, so dass z.B. eine Verbindungsleitung 17 mit Anschlussmitteln 16 in Form eines Steckers angeschlossen werden kann.

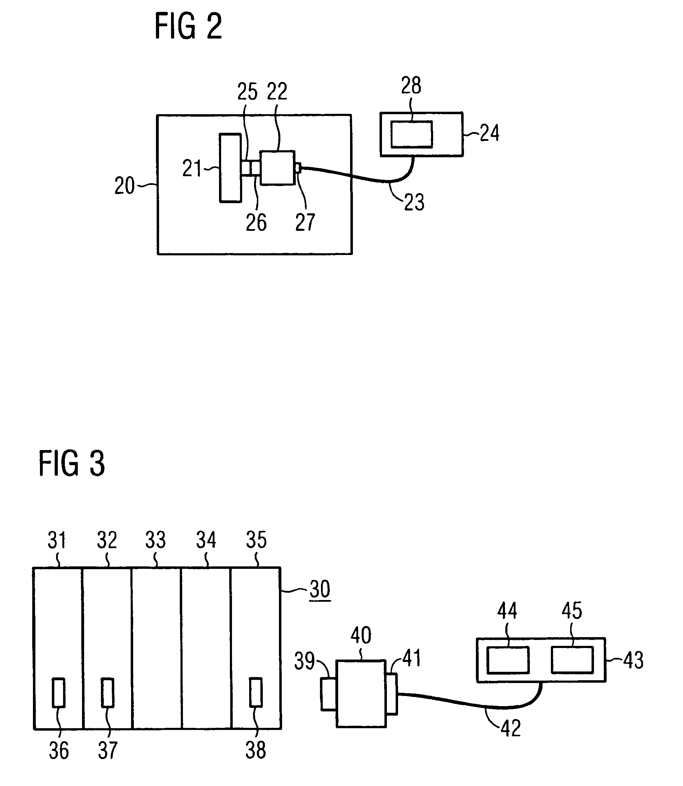

Figur 2 zeigt ein Ausführungsbeispiel der Erfindung zur Anwendung in der Haustechnik. Dargestellt ist ein Heizkörper 20 mit elektronischen Mitteln 21 zur Verbrauchserfassung. Die elektronischen Mittel 21 weisen elektrische Kontaktmittel 25 auf. Der Verbrauch des Heizkörpers 20 wird zwar kontinuierlich erfasst, jedoch üblicherweise nur einmal jährlich abgelesen. Zum Anschluss eines Ablesegeräts 24 mit Anzeigemitteln 28, auf welchem z.B. ein Web Browser installiert ist, ist die Aufbereitung der erfassten Verbrauchswerte z.B. in Form einer Web Page erforderlich, z.B. durch einen Webserver. Aus Kostengründen ist die Integration eines solchen Webservers in die elektronischen Mittel 21 jedoch nicht sinnvoll, da diese Funktionalität nur sehr selten, nämlich einmal jährlich während der Ablesung, benötigt wird. Vorteilhafterweise wird die Webserver-Funktionalität somit in einen externen Kommunikationsbaustein 22 ausgelagert, welcher über Anschlussmittel 26 an die elektrischen Kontaktmittel 25 der elektronischen Mittel 21 bei Bedarf angeschlossen werden kann. Über die Schnittstelle 27 ist der Kommunikationsbaustein 22 mittels einer Leitung 23 mit dem Ablesegerät 24 verbunden. In den steckbaren Kommunikationsbaustein 22 ist ein Webserver integriert, welcher die Verbrauchswerte in Form einer Web Page aufbereitet und dem Web Browser des Ablesegeräts 24 zur Verfügung stellt. Durch die direkte Steckverbindung zwischen den elektronischen Mitteln 21 und dem Kommunikationsbaustein 22 kann die Verbindung zwischen den beiden Komponenten nach erfolgter Ablesung der Verbrauchswerte wieder getrennt werden und die Ablesung z.B. bei weiteren Heizkörpern fortgesetzt werden.

Figur 3 zeigt ein Ausführungsbeispiel der Erfindung zur Anwendung in der industriellen Automatisierungstechnik. Dargestellt sind Komponenten 31 - 35 eines industriellen Automatisierungssystems 30. Die Komponenten 31, 32 und 35 weisen Schnittstellen 36, 37 bzw. 38 auf. Mit diesen Schnittstellen 36, 37 und 38 mittels Anschlussmitteln 39 reversibel verbindbar ist ein Kommunikationsbaustein 40. Der Kommunikationsbaustein 40 weist weitere Anschlussmittel 41 auf, welche über eine Verbindungsleitung 42 mit einem Client 43, z. B. einem Bedien- und/oder Beobachtungsgerät, verbunden ist. Der Client 43 weist Anzeigemittel 44 sowie Bedienmittel 45 auf und ist ein Ausführungsbeispiel einer Mensch-Maschine-Schnittstellen-Komponente.

Bisher erfolgen Zugriffe auf Komponenten, z.B. auf speicherprogrammierbare Steuerungen, Peripheriebaugruppen, Kühlschränke, Fotoapparate, etc. für Konfiguration, Upgrade, Wartung, Download, etc. häufig über Webserver bzw. Web Services. Dabei sind die Webserver bzw. Web Services (gegebenenfalls auch andere Services) auf den Baugruppen selbst ablauffähig und stellen dort das TCP/IP- und HTTP-Protokoll sowie meist noch andere Protokolle zur Verfügung (z.B. SOAP, OPC XML, Konfigurationsprotokolle, etc.). Unter Verwendung eines Web Browsers kann ein Anwender dann auf Web Pages zugreifen und auch Web Services nutzen, z.B. Konfigurationsprogramme, Wartungsprogramme, Programme für Bedienung und Beobachtung, Instandhaltung, Inventur, etc.

Client-Programme, programmiert z.B. in JAVA, J-Script etc., können auf die Daten der Baugruppe zugreifen. Webserver und Web Services auf der jeweiligen Baugruppe ermöglichen die Nutzung der Vorteile der Internet-Technologie, wie z.B. kostengünstige Standard-Software und -Hardware am Client, weltweite Zugreifbarkeit, etc. Viele der oben genannten Baugruppe sind jedoch im Vergleich zum PC "kleine" Geräte, welche in großen Stückzahlen benötigt werden. Deshalb sind solche Baugruppen oft besonders kostensensitiv. Die Internet-Technologie ist jedoch in ihrer Konzeption auf PC mit den entsprechenden Hardware-Ressourcen ausgelegt. Webserver und Web Services verursachen deshalb oft überproportionale Kosten auf den Baugruppen, z.B. für RAM und CPU. Diese Kosten entstehen auch dann, wenn der Zugriff nur gelegentlich und lokal benötigt wird, z.B. innerhalb der Fabrik oder zum gelegentlichen Rekonfigurieren der Baugruppen, z.B. bei der Umstellung auf eine andere Produktionsart. Je umfangreicher die Daten und die Funktionalität der Web Pages und Web Services sind, desto größer sind die an der Baugruppe entstehenden Kosten. Bisher wurden die Internet-Funktionalitäten von Baugruppen daher oft dadurch limitiert, dass aus Kostengründen nur kleine oder gar keine Webserver, Web Services und Web Pages auf den Baugruppen verwendbar waren. Eine andere übliche Lösung ist die Verbindung der Baugruppen über nicht internetfähige Protokolle mit einem PC, wobei der PC die gesamte Web-Funktionalität zur Verfügung stellt. Der Nachteil dieser bisher üblichen Variante ist, dass ein PC notwendig ist, welcher in vielen Fällen, insbesondere in weniger entwickelten Gegenden, zu teuer ist bzw. aufgrund des Ausbildungsniveaus und Komplexität der Handhabung oder der Baugröße nicht sinnvoll einsetzbar ist.

Die hier vorgeschlagene Lösung besteht insbesondere in einem Hardware-Web-Kommunikations-Baustein (Web-Stecker) z.B. in Bauform eines Ethernet-Steckers/-Kabels, SIM-kompatiblen Moduls einer Speicherkarte oder eines USB-Steckers. Mit diesem Kommunikations-Baustein werden Web Services und/oder sonstige nur gelegentlich benötigte Services ausgeführt. Im Kommunikations-Baustein kann der Code für einen Webserver bzw. für Web Services oder andere Services gespeichert werden und/oder Web Pages und/oder sonstige für die baugruppenexterne Kommunikation verwendeten Daten gespeichert werden. Ein Webserver ist eine typische Komponente zur Ausführung von Kommunikationsaufgaben mittels Internet-Technologie. Der Kommunikations-Baustein kann als Miniatur-CPU-Modul z.B. als Teil eines Verbindungskabels oder als Teil einer Multimedia-Card ausgeführt werden.

Gemäß einem weiteren Ausführungsbeispiel soll eine Baugruppe zur Steuerung einer Maschine möglichst kostengünstig produziert werden, wobei die Baugruppe jedoch trotzdem mit Internet-Technologie und einem Standard-PC konfiguriert, diagnostiziert und gewartet werden können soll. Für die tägliche Bedienung der Baugruppe ist jedoch kein Web-Anschluss erforderlich. Zudem soll eine baugruppenspezifische Software-Installation auf dem Standard-PC vermieden werden. Die Bereitstellung der baugruppenspezifischen Software auf der Baugruppe selbst würde jedoch zu unerwünscht hohen Kosten führen. Eine kostengünstige Lösung bietet hier ein Web-Kommunikations-Baustein, welcher sowohl die baugruppenspezifische Konfigurations-Software als auch die erforderlichen Software-Komponenten zur Ausführung von Kommunikationsaufgaben mittels Internet-Technologien zur Verfügung stellt. Dieser Web-Kommunikations-Baustein wird nur bei Bedarf an die Baugruppe zur Steuerung der Maschine angeschlossen und kann so zur sequentiellen Konfiguration verschiedener Baugruppen verwendet werden.

Ein weiteres Ausführungsbeispiel der Erfindung ist ein steckbarer USB-Kommunikations-Baustein (USB-Master und/oder -Slave). USB steht für "Universal Serial Bus" (Universeller Serieller Bus) und bezeichnet einen Industrie-Standard, welcher Kommunikationsverfahren und Kommunikationsmittel definiert, insbesondere zur Verbindung von peripheren Komponenten mit Rechnern. Ein solcher USB-Kommunikations-Baustein kann z. B. zum Anschluss von Feldgeräten, PLCs, PCs, PDAs dienen. Als Bauform vorgeschlagen wird ein Kabel oder ein abgesetzter Interface-Baustein, wobei der USB-Kommunikations-Baustein nicht fest mit der PLC, der Backplane oder den I/O-Modulen verbunden ist, sondern abgesetzt ist über vorhandene Schnittstellen verschieden von USB. Besondere Ausprägungen eines solchen USB-Kommunikations-Bausteins sind abgesetzt durch DP, PPI, MPI, OPC, HTTP, SOAP, Bluetooth, etc.

Ein solcher USB-Kommunikations-Baustein - z. B. in der Bauform eines Ethernet-Steckers, eines SIM-kompatiblen Moduls, einer SD- oder MMC-Karte - kann für Engineering, Konfiguration, HMI, Diagnose und/oder Trace verwendet werden. Auf dem USB-Kommunikations-Baustein können optional zusätzlich Webserver und Web Services und/oder sonstige nur gelegentlich benötigten Services ausgeführt werden und/oder der Code für USB, die Server und Services gespeichert werden und/oder Webpages und/oder sonstige für die Baugruppen-externe Kommunikation verwendeten Daten gespeichert werden. Der USB-Kommunikations-Baustein ist an die Baugruppe, die PLC, das I/O-Modul, das Feldgerät ansteckbar und nicht fest mit diesem verbunden, wobei der USB-Kommunikations-Baustein elektrisch so nahe an der Baugruppe liegt, dass Baugruppen-interne Zugriffsschnittstellen nutzbar sind, z. B. der Baugruppeninterne Daten- und Adressbus oder nicht remote-fähige Software-Schnittstellen. Es müssen daher nicht Rückwandbus, I/O-Bus oder sonstige auf der PLC standardmäßig vorhandene remote-fähige Schnittstellen verwendet werden, um die USB-Connectivity zu erreichen.

Zusammengefasst betrifft die Erfindung somit einen steckbaren Kommunikations-Baustein 1 sowie ein Verfahren zur Kommunikation mittels eines steckbaren Kommunikations-Bausteins 1 zur Vereinfachung der Kommunikationsanbindung von Baugruppen und Geräten. Es wird ein Kommunikations-Baustein 1 mit Mitteln 2 zur Speicherung und Ausführung von Softwarekomponenten 3, 4, 5 mit Kommunikationsfunktionalität vorgeschlagen, mit ersten Anschlussmitteln 7 zur direkten elektrischen und mechanischen Kopplung mit Schnittstellen 8 mindestens einer ersten Baugruppe 9, mit Zugriffsmitteln 6 zum Zugriff auf lokale Kommunikationsmittel 10 der ersten Baugruppe 9 und mit zweiten Anschlussmitteln 11 zur elektrischen Kopplung mit Schnittstellen 12 mindestens einer zweiten Baugruppe 13. Vorteilhafte Ausgestaltungen betreffen insbesondere einen Kommunikations-Baustein, bei dem zumindest eine der Softwarekomponenten 3, 4, 5 zur Ausführung von Kommunikationsaufgaben mittels Internettechnologien vorgesehen ist und/oder zumindest eine der Softwarekomponenten 3, 4, 5 ein Webserver ist oder zur Ausführung von Webservices vorgesehen ist. Insbesondere wird eine steckbare (Kabel-)Kupplung vorgeschlagen, die eine oder mehrere der folgenden Technologien in jeweils eine oder mehrere der anderen Technologien logisch und physikalisch umsetzt: RS232, RS485, SPI, Profibus, Feldbus, MPI, OPC in USB, Ethernet, HTTP, SOAP, SOAP over USB, OPC XML over USB.

## Patentansprüche

1. Steckbarer Kommunikations-Baustein (1) mit Mitteln (2) zur Speicherung und Ausführung von Softwarekomponenten (3, 4, 5) mit Kommunikationsfunktionalität, mit ersten Anschlussmitteln (7) zur direkten elektrischen und mechanischen Kopplung mit Schnittstellen (8) mindestens einer ersten Baugruppe (9), mit Zugriffsmitteln (6) zum Zugriff auf lokale Kommunikationsmittel (10) der ersten Baugruppe (9) und mit zweiten Anschlussmitteln (11) zur elektrischen Kopplung mit Schnittstellen (12) mindestens einer zweiten Baugruppe (13)
**dadurch gekennzeichnet,**
**dass** die Zugriffsmittel (6) zum Zugriff auf einen Daten- und Adressbus (14) der ersten Baugruppe (9) vorgesehen sind.

2. Kommunikations-Baustein nach Anspruch 1, **dadurch gekennzeichnet, dass** zumindest eine der Softwarekomponenten (3, 4, 5) zur Ausführung von Kommunikationsaufgaben mittels Internettechnologien vorgesehen ist.

3. Kommunikations-Baustein nach Anspruch 1 oder 2, **dadurch gekennzeichnet, dass** zumindest eine der Softwarekomponenten (3, 4, 5) ein Webserver ist oder zur Ausführung von Webservices vorgesehen ist.

4. Kommunikations-Baustein nach einem der vorhergehenden Ansprüche, **dadurch gekennzeichnet, dass** die Zugriffsmittel (6) zum Zugriff auf die Kommunikationsmittel (10) der ersten Baugruppe (9) mittels eines generisch erweiterbaren, lokal nutzbaren Punkt-zu-Punkt-Zugriffsprotokolls vorgesehen sind.

5. Kommunikations-Baustein nach einem der vorhergehenden Ansprüche, **dadurch gekennzeichnet, dass** die Mittel (2) zur Speicherung und Ausführung von Softwarekomponenten (3, 4, 5) zum Laden von Softwarekomponenten (3, 4, 5) vorgesehen sind.

6. Kommunikations-Baustein nach einem der vorhergehenden Ansprüche, **dadurch gekennzeichnet, dass** die ersten Anschlussmittel (7) zur direkten elektrischen Kopplung mit Schnittstellen von Baugruppen industrieller Automatisierungssysteme vorgesehen sind.

7. Kommunikations-Baustein nach Anspruch 6, **dadurch gekennzeichnet, dass** die zweiten Anschlussmittel (11) zur elektrischen Kopplung mit Schnittstellen von Mensch-Maschine-Schnittstellen-Komponenten für Engineering, Parametrierung und/oder Beobachtung der Baugruppen industrieller Automatisierungssysteme vorgesehen sind.

8. Kommunikations-Baustein nach einem der vorhergehenden Ansprüche, **dadurch gekennzeichnet, dass** der Kommunikations-Baustein (1) als Stecker ausgeführt ist.

9. Kommunikations-Baustein nach einem der Ansprüche 1 bis 7, **dadurch gekennzeichnet, dass** der Kommunikations-Baustein (1) fest in ein Kabel integriert ist.

10. Kommunikations-Baustein nach einem der vorhergehenden Ansprüche, **dadurch gekennzeichnet, dass** die zweite Baugruppe (13) als Mensch-Maschine-Schnittstellen-Komponente ausgebildet ist.

11. Verfahren zur Kommunikation mittels eines steckbaren Kommunikations-Bausteins (1), bei welchem Verfahren im Kommunikations-Baustein (1) Softwarekomponenten (3, 4, 5) mit Kommunikationsfunktionalität gespeichert und ausgeführt werden, erste Anschlussmittel (7) des Kommunikations-Bausteins (1) mit Schnittstellen (8) mindestens einer ersten Baugruppe (9) direkt elektrisch und mechanisch gekoppelt werden, der Kommunikations-Baustein (1) auf lokale Kommunikationsmittel (10) der ersten Baugruppe (9) zugreift und mittels zweiter Anschlussmittel (11) mit Schnittstellen (12) mindestens einer zweiten Baugruppe (13) elektrisch gekoppelt ist
**dadurch gekennzeichnet,**
**dass** der Kommunikations-Baustein (1) auf einen Daten- und Adressbus (14) der ersten Baugruppe (9) zugreift.

12. Verfahren nach Anspruch 11, **dadurch gekennzeichnet, dass** zumindest eine der Softwarekomponenten (3, 4, 5) Kommunikationsaufgaben mittels Internettechnologien ausführt.

13. Verfahren nach Anspruch 11 oder 12, **dadurch gekennzeichnet, dass** zumindest eine der Softwarekomponenten (3, 4, 5) ein Webserver ist oder Webservices ausführt.

14. Verfahren nach einem der Ansprüche 11 bis 13, **dadurch gekennzeichnet, dass** der Kommunikations-Baustein (1) auf die Kommunikationsmittel (10) der ersten Baugruppe (9) mittels eines generisch erweiterbaren, lokal nutzbaren Punkt-zu-Punkt-Zugriffsprotokolls zugreift.

15. Verfahren nach einem der Ansprüche 11 bis 14, **dadurch gekennzeichnet, dass** der Kommunikations-Baustein (1) Softwarekomponenten (3, 4, 5) laden kann.

16. Verfahren nach einem der Ansprüche 11 bis 15, **dadurch gekennzeichnet, dass** die ersten Anschlussmittel (7) mit Schnittstellen von Baugruppen industrieller Automatisierungssysteme direkt elektrisch gekoppelt sind.

17. Verfahren nach Anspruch 16, **dadurch gekennzeichnet, dass** der Kommunikations-Baustein (1) mittels der zweiten Anschlussmittel (11) mit Schnittstellen (12) von Mensch-Maschine-Schnittstellen-Komponenten für Engineering, Parametrierung und/oder Beobachtung der Baugruppen industrieller Automatisierungssysteme elektrisch gekoppelt ist.

18. Verfahren nach einem der Ansprüche 11 bis 17, **dadurch gekennzeichnet, dass** der Kommunikations-Baustein (1) als Stecker ausgeführt ist.

19. Verfahren nach einem der Ansprüche 11 bis 17, **dadurch gekennzeichnet, dass** der Kommunikations-Baustein (1) fest in ein Kabel integriert ist.

20. Verfahren nach einem der Ansprüche 11 bis 19, **dadurch gekennzeichnet, dass** die zweite Baugruppe (13) als Mensch-Maschine-Schnittstellen-Komponente ausgebildet ist.

## Claims

1. Pluggable communication component (1) with means (2) for the storage and implementation of software components (3, 4, 5) with communication functionalities, with first connection means (7) for direct electrical and mechanical linkage with interfaces (8) of at least one first module (9), with access means (6) for accessing local communication means (10) of the first module (9) and with second connection means (11) for electrical linkage with interfaces (12) of at least one second module (13)
**characterised in that**
the access means (6) are provided for accessing a data and address bus (14) of the first module (9).

2. Communication component according to claim 1, **characterized in that** at least one of the software components (3, 4, 5) is provided for the execution of communication tasks by means of Internet technologies.

3. Communication component according to claim 1 or 2, **characterized in that** at least one of the software components (3, 4, 5) is
a Web server, or is provided for the execution of Web services.

4. Communication component according to one of the preceding claims, **characterised in that** the access means (6) are provided for accessing the communication means (10) of the first module (9) by means of a generically expandable point-to-point access protocol capable of local use.

5. Communication component according to one of the preceding claims, **characterised in that** the means (2) for storage and execution of software components (3, 4, 5) are provided for the loading of software components (3, 4, 5).

6. Communication component according to one of the preceding claims, **characterised in that**
the first connection means (7) are provided for direct electrical linkage with interfaces of modules of industrial automation systems.

7. Communication component according to claim 6,
**characterised in that**
the second connection means (11) is provided for electrical linkage with interfaces on man-machine interface components for engineering, parameterising and/or observation of the modules of industrial automation systems.

8. Communication component according to one of the preceding claims, **characterised in that** the communication component (1) is embodied as a plug.

9. Communication component according to one of the claims 1 to 7, **characterised in that** the communication component (1) is permanently integrated into a cable.

10. Communication component according to one of the preceding claims, **characterised in that** the second module (13) is embodied as a man-machine interface component.

11. Method for communication by means of a pluggable communication component (1), in which software components (3, 4, 5) with communication functionalities are stored and implemented in said communication component (1), first communication means (7) of said communication component (1) are directly linked, electrically and mechanically, with interfaces (8) of at least one first module (9), said communication component (1) accesses local communication means (10) of the first module (9) and is electrically linked with interfaces (12) of at least one second module (13)
**characterised in that**
the communication component (1) accesses a data and address bus (14) of the first module (9).

12. Method according to claim 11, **characterised in that** at least one of the software components (3, 4, 5) performs communication tasks by means of Internet technologies.

13. Method according to claim 11 or 12, **characterised in that** at least one of the software components (3, 4, 5) is a Web server, or performs Web services.

14. Method according to one of the claims 11 to 13, **characterized in that** the communication component (1) accesses the communication means (10) of the first module (9) by means of a generically expandable point-to-point access protocol capable of local use.

15. Method according one of the claims 11 to 14, **characterised in that** the communication component (1) is capable of loading software components (3, 4, 5).

16. Method according to one of the claims 11 to 15, **characterised in that** the first connection means (7) are directly electrically linked with interfaces of modules of industrial automation systems.

17. Method according to claim 16, **characterised in that** the communication component (1) is electrically linked with interfaces (12) of man-machine interface components for engineering, parameterising and/or observation of the modules of industrial automation systems.

18. Method according to one of the claims 11 to 17, **characterised in that** the communication component (1) is embodied as a plug.

19. Method according to one of the claims 11 to 17, **characterised in that** the communication component (1) is permanently integrated into a cable.

20. Method according to one of the claims 11 to 19, **characterised in that** the second module (13) is embodied as a man-machine interface component.

## Revendications

1. Dispositif de communication (1) enfichable, ayant des moyens (2) pour le stockage et l'exécution de composants logiciels (3, 4, 5) avec fonctionnalité de communication, des premiers moyens de connexion (7) pour le couplage électrique et mécanique direct avec des interfaces (8) d'au moins un premier module (9), des moyens d'accès (6) pour l'accès à des moyens de communication (10) locaux du premier module (9), et des deuxièmes moyens de connexion (11) pour le couplage électrique avec des interfaces (12) d'au moins un deuxième module (13),
**caractérisé en ce que**
les moyens d'accès (6) sont prévus pour l'accès à un bus de données et d'adresses (14) du premier module (9).

2. Dispositif de communication selon la revendication 1,
**caractérisé en ce que** au moins un des composants logiciels (3, 4, 5) est prévu pour l'exécution de tâches de communication au moyen de technologies Internet.

3. Dispositif de communication selon la revendication 1 ou 2, **caractérisé en ce que** au moins un des composants logiciels (3, 4, 5) est un serveur Web, ou est prévu pour l'exécution de services Web.

4. Dispositif de communication selon une des revendications précédentes, **caractérisé en ce que** les moyens d'accès (6) sont prévus pour l'accès aux moyens de communication (10) du premier module (9) au moyen d'un protocole d'accès point à point pouvant être utilisé localement, et pouvant être étendu de façon générique.

5. Dispositif de communication selon une des revendications précédentes, **caractérisé en ce que** les moyens (2) de stockage et d'exécution de composants logiciels (3, 4, 5) sont prévus pour le chargement de composants logiciels (3, 4, 5).

6. Dispositif de communication selon une des revendications précédentes, **caractérisé en ce que** les premiers moyens de connexion (7) sont prévus pour le couplage électrique direct avec des interfaces de modules de systèmes d'automatisation industriels.

7. Dispositif de communication selon la revendication 6,
**caractérisé en ce que** les deuxièmes moyens de connexion (11) sont prévus pour le couplage électrique avec des interfaces de composants d'interface homme-machine pour l'ingénierie, le paramétrage et/ou l'observation de modules de systèmes d'automatisation industriels.

8. Dispositif de communication selon une des revendications précédentes, **caractérisé en ce que** le module de communication (1) est réalisé en tant que fiche.

9. Dispositif de communication selon une des revendications 1 à 7, **caractérisé en ce que** le dispositif de communication (1) est intégré de façon fixe dans un câble.

10. Dispositif de communication selon une des revendications précédentes, **caractérisé en ce que** le deuxième module (13) est constitué en tant que composant d'interface homme-machine.

11. Procédé de communication au moyen d'un dispositif de communication (1) enfichable, dans lequel procédé, dans le dispositif de communication (1), des composants logiciels (3, 4, 5) avec fonctionnalité de communication sont stockés et exécutés, des premiers moyens de connexion (7) du dispositif de communication (1) sont couplés électriquement et mécaniquement directement avec des interfaces (8) d'au moins un premier module (9), le dispositif de communication (1) accède à des moyens de communication (10) locaux du premier module (9) et, au moyen de deuxièmes moyens de connexion (11), est couplé électriquement avec des interfaces (12) d'au moins un deuxième module (13),
**caractérisé en ce que**
le dispositif de communication (1) accède à un bus de données et d'adresses (14) du premier module (9).

12. Procédé selon la revendication 11, **caractérisé en ce que** au moins un des composants logiciels (3, 4, 5) exécute des tâches de communication au moyen de technologies Internet.

13. Procédé selon la revendication 11 ou 12, **caractérisé en ce que** au moins un des composants logiciels (3, 4, 5) est un serveur Web, ou est prévu pour l'exécution de services Web.

14. Procédé selon une des revendications 11 à 13, **caractérisé en ce que** le dispositif de communication (1) accède aux moyens de communication (10) du premier module (9) au moyen d'un protocole d'accès point à point pouvant être utilisé localement, et pouvant être étendu de façon générique.

15. Procédé selon une des revendications 11 à 14, **caractérisé en ce que** le dispositif de communication (1) peut charger de composants logiciels (3, 4, 5).

16. Procédé selon une des revendications 11 à 15, **caractérisé en ce que** les premiers moyens de connexion (7) sont couplés de façon directement électrique avec des interfaces de modules de systèmes d'automatisation industriels.

17. Procédé selon la revendication 16, **caractérisé en ce que** le dispositif de communication (1) est couplé électriquement, au moyen des deuxièmes moyens de connexion (11), avec des interfaces (12) de composants d'interface homme-machine pour l'ingénierie, le paramétrage et/ou l'observation de modules de systèmes d'automatisation industriels.

18. Procédé selon une des revendications 11 à 17, **caractérisé en ce que** le module de communication (1) est réalisé en tant que fiche.

19. Procédé selon une des revendications 11 à 17, **caractérisé en ce que** le dispositif de communication (1) est intégré de façon fixe dans un câble.

20. Procédé selon une des revendications 11 à 19, **caractérisé en ce que** le deuxième module (13) est constitué en tant que composant d'interface homme-machine.
